# EUROPÄISCHE PATENTSCHRIFT

(11) **EP 2 078 626 B1**
(45) Veröffentlichungstag und Bekanntmachung des Hinweises auf die Patenterteilung: **19.01.2011**
(21) Anmeldenummer: 08021490.1
(22) Anmeldetag: 11.12.2008
(51) Int. Cl.: B60C 27/06, B60C 27/10

(54) **Vorrichtung zum Verhindern eines Durchrutschens bzw. Durchdrehens eines Fahrzeugrades, insbesondere eines Lastkraftwagen- oder Omnibus-Rades**
Device for preventing the slipping or spinning of a vehicle wheel, especially a wheel on a lorry or bus
Dispositif destiné à éviter un glissement ou un patinage d'une roue de véhicule, en particulier une roue de camion ou d'omnibus

(30) Priorität: 09.01.2008 DE 102008003625
(43) Veröffentlichungstag der Anmeldung: 15.07.2009
(73) Patentinhaber: Grizzly Snow Grip GmbH, 90461 Nürnberg (DE)
(72) Erfinder: Hollfelder, Alfred, 91301 Forchheim (DE)
(74) Vertreter: Führing, Dieter

(56) Entgegenhaltungen:
- EP-A- 0 791 489
- DE-A1- 4 121 737

## Beschreibung

Die Erfindung betrifft eine Vorrichtung zum Verhindern eines Durchrutschens bzw. eines Durchdrehens eines in seiner Felge Löcher aufweisenden Fahrzeugrades, insbesondere eines Lastkraftwagen- oder Omnibus-Rades, mit den Reifen des Rades umgreifenden Kettenelementen, mit einer Halteeinrichtung zum Halten der Kettenelemente, wobei die Halteeinrichtung ein einseitig offenes Ringelement mit einem die Öffnung des Ringelementes überspannenden Spannorgan aufweist, mit am Ringelement befestigten ersten Hakenelement-Paaren, und mit einem dem jeweiligen ersten Hakenelement-Paar zugeordneten, in Achsrichtung der Felge mittels einer Gewindespindel gegen die Kraft eines Federelementes verstellbaren zweiten Hakenelement, wobei die Gewindespindel in der Nachbarschaft des zweiten Hakenelementes ein Widerlagerorgan für das Federelement und eine Verdrehsicherungseinrichtung aufweist.

Eine derartige Vorrichtung ist aus der DE 41 21 737 C2 der Anmelderin bekannt.

Um bei einem Bruch eines Kettenelementes zu verhindern, dass dieses Kettenelement während der Drehung des Fahrzeugrades, d.h. während der Fahrt des Fahrzeuges, vom Fahrzeugrad weggeschleudert wird und eine Verletzungsgefahr darstellt, werden die das entsprechende Rad umgreifenden Kettenelemente zusätzlich mit Verbindungskettenelementen verbunden, die in Umfangsrichtung des Rades an der Seitenwange des Reifens anliegend angeordnet werden. Die Montage dieser Verbindungskettenelemente stellt einen entsprechenden Zeit- und Montageaufwand dar.

In Kenntnis dieser Gegebenheiten liegt der Erfindung die Aufgabe zugrunde, eine Vorrichtung der eingangs genannten Art zu schaffen, mit welcher ein unerwünschtes und eine Verletzungsgefahr darstellendes Wegschleudern eines gebrochenen Kettenelementes mit konstruktiv einfachen Mitteln verhindert wird.

Diese Aufgabe wird erfindungsgemäß durch die Merkmale des Anspruches 1, d.h. dadurch gelöst, dass die Verdrehsicherungseinrichtung ein Paar Fingerelemente aufweist, deren vom Widerlagerorgan entfernte, freie Enden den beiden ersten Hakenelementen derartig zugeordnet sind, dass der Spaltabstand zwischen den freien Enden der beiden Fingerelemente und den freien Enden der zugehörigen beiden ersten Hakenelemente im Spannzustand des entsprechenden Kettenelementes kleiner ist als die Querschnittsabmessungen der Kettenglieder des zugehörigen Kettenelementes.

Durch diesen kleinen Spaltabstand im Spannzustand des entsprechenden Kettenelementes ergibt sich der Vorteil, dass ein gebrochenes Kettenelement sich nicht vom Fahrzeugrad loslösen kann, sondern durch das Fingerelement-Paar und das zugehörige Hakenelement-Paar an der Vorrichtung und somit am Fahrzeugrad festgehalten wird. Eine Verletzungsgefahr durch Kettenelement-Teile eines gebrochenen Kettenelementes, die von einem sich drehenden Fahrzeugrad weggeschleudert würden, wird also in vorteilhafter Weise mit einfachen Mitteln verhindert.

Zweckmäßig ist es hierbei, wenn die beiden ersten Hakenelemente des jeweiligen Hakenelement-Paares zur Vereinfachung der Montage eines Kettenelementes von der vom einseitig offenen Ringelement aufgespannten Ebene in axialer Richtung der Felge ungleich weit wegstehen, und wenn die zugehörigen beiden Fingerelemente daran angepasste, ungleiche Längen besitzen, um den Spaltabstand zwischen den ungleich langen ersten Hakenelementen und den entsprechend ungleich langen Fingerelementen im Spannzustand des zugehörigen Kettenelementes entsprechend klein, d.h. kleiner als die Querschnittsabmessungen der Kettenglieder des entsprechenden Kettenelementes zu verwirklichen.

Um das einseitig offene Ringelement zuverlässig in eine Felge bzw. in deren stirnseitige, umlaufende Fefgenrinne einspannen und darin festlegen zu können, hat es sich als vorteilhaft erwiesen, wenn an den beiden Endabschnitten des einseitig offenen Ringelementes jeweils ein Hülsenelement befestigt ist, und wenn sich durch die beiden Hülsenelemente ein Gewindebolzen mit mechanischem Spiel hindurch erstreckt. Das mechanische Spiel wird dadurch erreicht, dass die Hülsenelemente jeweils mit einem Durchgangsloch ausgebildet sind, dessen lichte Innenabmessungen größer sind als der Außendurchmesser des Gewindebolzens.

Um das einseitig offene Ringelement zu seiner Fixierung in der Felge entsprechend aufweiten zu können, kann der Gewindebolzen ein dem einen Hülsenelement zugeordnetes und am Gewindebolzen fixiertes Widerlagerelement und eine dem anderen Hülsenelement zugeordnete Schraubmutter mit einer Kontermutter aufweisen.

Weitere Einzelheiten, Merkmale und Vorteile ergeben sich aus der nachfolgenden Beschreibung eines in der Zeichnung dargestellten Ausführungsbeispieles der erfindungsgemäßen Vorrichtung bzw. wesentlicher Einzelheiten derselben.

Es zeigen:
Fig.1 einen Schnitt durch ein abschnittweise gezeichnetes Fahrzeugrad und durch eine entsprechend abschnittweise gezeichnete Vorrichtung zum Verhindern eines Durchrutschens bzw. eines Durchdrehens des Fahrzeugrades, wobei eines der Kettenelemente durch eine dünne strichpunktierte Linien angedeutet ist,
Fig.2 einen Abschnitt der Vorrichtung gemäß Fig.1 in einem größeren Maßstab,
Fig.3 eine abschnittweise Ansicht in Blickrichtung des Pfeiles III in Fig.2 zur Verdeutlichung der Verdrehsicherungseinrichtung mit den beiden abgeschnitten gezeichneten Fingerelementen,
Fig.4 in einer schematischen Ansicht einen Abschnitt des Ringelementes mit einem ersten Hakenelement-Paar, dem zweiten Hakenelement, dem Federelement, und den dem ersten Hakenelement-Paar zugeordneten beiden Fingerelementen der Verdrehsicherungseinrichtung,
Fig. 5 eine der Fig.4 ähnliche Darstellung des ersten Hakenelement-Paares, des zweiten Hakenelementes, des Federelementes, der Gewindespindel und der Verdrehsicherungseinrichtung mit den beiden Fingerelementen - in einer Draufsicht,
Fig.6 eine Ansicht in Blickrichtung des Pfeiles VI in Fig.5, und
Fig.7 eine Vorderansicht eines Abschnittes des einseitig offenen Ringelementes zur Verdeutlichung der beiden Hülsenelemente und des Gewindebolzens zum Aufweiten des Ringelementes.

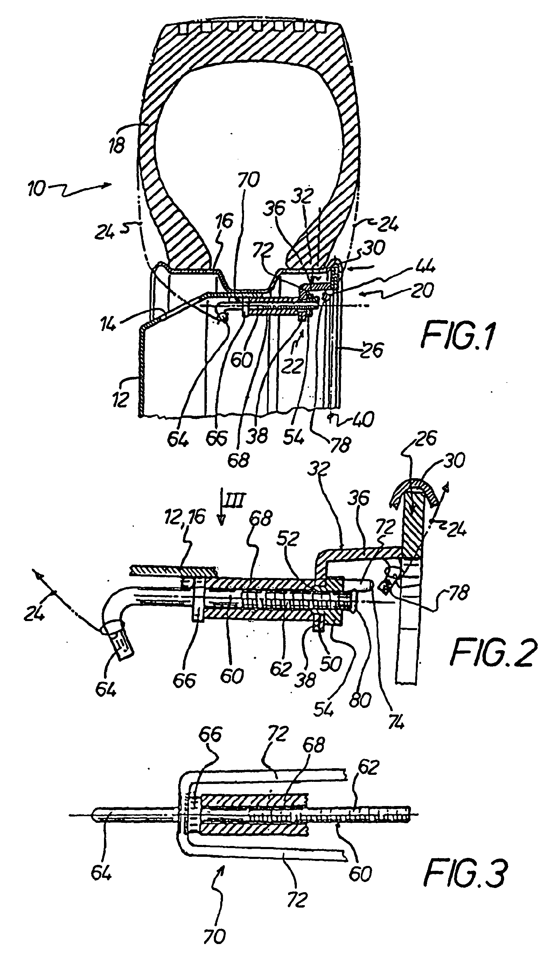

Fig.1 zeigt abgeschnitten ein Fahrzeugrad 10 mit einer Felge 12, die in Umfangsrichtung gleichmäßig verteilt mit Löchern 14 ausgebildet ist. Die Felge 12 weist ein Felgenbett 16 auf, in welchem ein Reifen 18 angeordnet ist.

Am Fahrzeugrad 10 ist eine Vorrichtung 20 temporär angebracht, die dazu dient, ein Durchrutschen bzw. Durchdrehen des Fahrzeugrades 10, bei dem es sich insbesondere um ein Lastkraftwagen- oder Omnibus-Rad handelt, bspw. auf einem eisglatten oder mit Schnee bedeckten Untergrund zu verhindern. Zu diesem Zwecke weist die Vorrichtung 20 eine Halteeinrichtung 22 für Kettenelemente 24 auf, die den Reifen 18 umschließen. Eines der Kettenelemente 24 ist in Fig.1 durch eine dünne strichpunktierte Linie angedeutet.

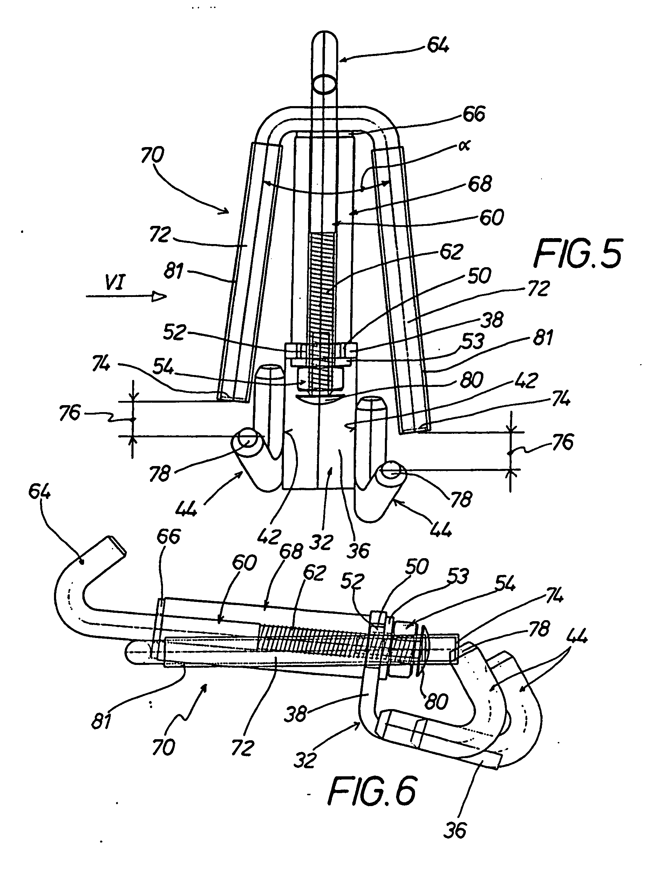

Die Halteeinrichtung 22 weist ein einseitig offenes Ringelement 26 (siehe bspw. auch Fig.5) auf. Die Öffnung 27 des Ringelementes 26 ist von einem Spannorgan 28 überspannt. Mit Hilfe des Spannorgans 28 ist das einseitig offene Ringelement 26 aufweitbar, d.h. in seinem Durchmesser vergrößerbar, und in einer Felgenrinne 30 einer Felge 12 fixierbar, wie aus den Figuren 1 und 2 ersichtlich ist.

Vom Ringelement 26 stehen in Umfangsrichtung gleichmäßig verteilt Winkelelemente 32 weg, die in das Innere der Felge 12 weisen. Jedes Winkelelement 32 weist einen ersten Schenkel 36 und einen zweiten Schenkel 38 auf. Der erste Schenkel 36 ist am Ringelement 26 befestigt, d.h. festgeschweißt. Der zweite Schenkel 38 ist zu der vom Ringelement 26 aufgespannten Ebene, die in Fig.1 durch die dünne strichpunktierte Linie 40 angedeutet ist, mindestens annähernd parallel orientiert.

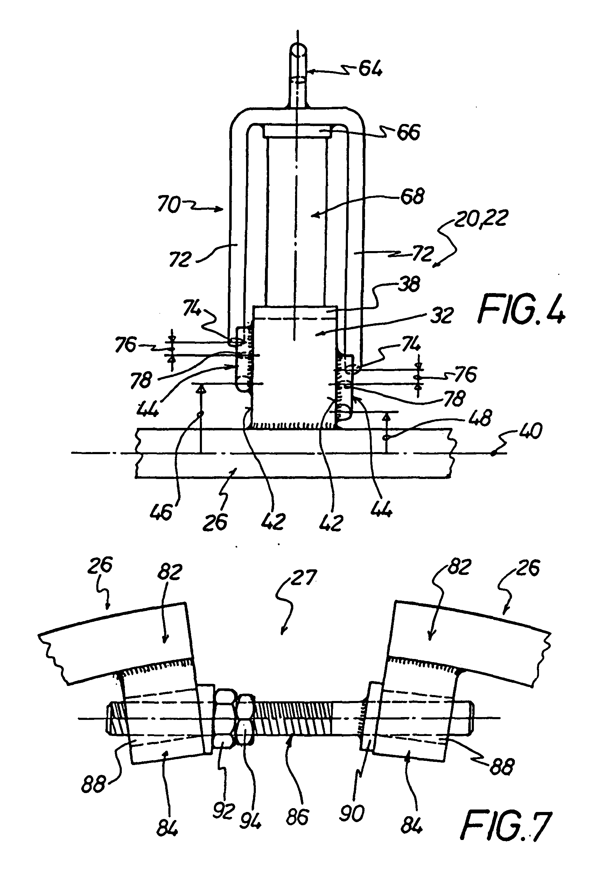

An den beiden voneinander abgewandten Seitenrändern 42 des ersten Schenkels 36 des Winkelelementes 32 ist je ein feststehendes erstes Hakenelement 44 befestigt, d.h. festgeschweißt, wie aus Fig.4 ersichtlich ist. Die Fig.4 verdeutlicht außerdem, dass die beiden feststehenden ersten Hakenelemente 44 von der durch das Ringelement 26 aufgespannten Ebene 40 ungleich weit beabstandet sind, um die Montage eines Kettenelementes 24 zu erleichtern. Dieser ungleiche Abstand ist in Fig.4 durch die Pfeile 46 und 48 verdeutlicht.

Wie aus Fig.2 ersichtlich ist, ist der zweite Schenkel 38 des jeweiligen Winkelelementes 32 mit einem Durchgangsloch 50 ausgebildet, in das sich ein Ringansatz 52 einer Schraubmutter 54 unverlierbar hinein erstreckt. Die Schraubmutter 54 ist am zweiten Schenkel 38 des Winkelelementes 32 axial unbeweglich, d.h. unverlierbar, und drehbar gelagert.

Durch die Schraubmutter 54 ist eine Gewindespindel 60 mit ihrem Gewindeabschnitt 62 durchgeschraubt. Die Gewindespindel 60 ist mit einem zweiten Hakenelement 64 ausgebildet. Die Gewindespindel 60 ist dem zweiten Hakenelement 64 zugeordnet mit einem Widerlagerorgan 66 versehen. Das Widerlagerorgan 66 ist mit der Gewindespindel 60 fest verbunden, d.h. verschweißt. Ein Federelement 68 umgibt die Gewindespindel 60 zwischen dem Widerlagerorgan 66 und dem zweiten Schenkel 38 des Winkelelementes 32, d.h. das Federelement 68 ist zwischen dem Widerlagerorgan 66 und dem zweiten Schenkel 38 des Winkelelementes 32 eingespannt. Bei dem Federelement 68 handelt es sich bspw. um eine Hülse aus einem elastisch nachgiebigen Material.

An der Gewindespindel 60 ist außerdem eine Verdrehsicherungseinrichtung 70 fixiert. Die Verdrehsicherungseinrichtung 70 liegt am Felgenbett 16 der Felge 12 innenseitig an. Wie aus den Figuren 3 und 4 ersichtlich ist, weist die Verdrehsicherungseinrichtung 70 ein Paar Fingerelemente 72 auf, deren vom Widerlagerorgan 66 entfernte, distale freie Enden 74 den beiden ersten Hakenelementen 44 derartig zugeordnet sind, dass der Spaltabstand 76 zwischen den distalen freien Enden 74 der beiden Fingerelemente 72 und den freien Enden 78 der zugehörigen beiden ersten Hakenelemente 44 im Spannzustand des entsprechenden Kettenelementes 24 kleiner ist als die Querschnittsabmessungen der Kettenglieder des zugehörigen Kettenelementes 24, so dass bei einem gebrochenen Kettenelement 24 der eine Verletzungsgefahr darstellende Vorderabschnitt des Kettenelementes 24 vom sich drehenden Fahrzeugrad 10 nicht weggeschleudert werden kann, sondern zwischen dem Hakenelement 44 und dem Fingerelement 72 festgehalten wird. Damit ergibt sich ein Verlierschutz für die Kettenelemente 24.

Die Befestigung eines Kettenelementes 24 am Fahrzeugrad 10 ist in der eingangs zitierten DE 41 21 737 C2 detailliert beschrieben, so dass es entbehrlich ist, hierauf noch einmal einzugehen.

Um die Schraubmutter 54 an der Gewindespindel 60 zuverlässig, d.h. unverlierbar, anzubringen, ist die Gewindespindel 60 an ihrem dem Ringelement 26 zugewandten Endabschnitt mit einem Sackloch ausgebildet, das zur Festlegung eines Stopfens 80 vorgesehen ist. Mit Hilfe des Stopfens 80 wird die Schraubmutter 54 zuverlässig und unverlierbar an der Gewindespindel 60 festgehalten (siehe Fig.2).

Die Figuren 5 und 6 zeigen ein Winkelelement 32 mit seinem ersten Schenkel 36 und seinem zweiten Schenkel 38 und den beiden ersten Hakenelementen 44, die an den Seitenrändern 42 des ersten Schenkels 36 des Winkelelementes 32 festgeschweißt sind. Der zweite Schenkel 38 des Wnkelelementes 32 ist mit einem Durchgangsloch 50 ausgebildet, in das sich ein Ringabsatz 52 eines Ringelementes 53 hinein erstreckt. Durch das Ringelement 53 erstreckt sich eine Gewindespindel 62 mit ihrem Gewindeabschnitt 62 hindurch. Auf den Gewindeabschnitt 62 ist eine Schraubmutter 54 aufgeschraubt.

Die Gewindespindel 60 ist mit einem Sackloch ausgebildet, das zur Festlegung eines Stopfens 80 vorgesehen ist. Der Stopfen 80 dient dazu, die Schraubmutter 54 an der Gewindespindel 60 unverlierbar anzubringen.

Die Gewindespindel 60 ist an ihrem vom Gewindeabschnitt 62 entfernten Endabschnitt mit einem zweiten Hakenelement 64 ausgebildet. Dem zweiten Hakenelement 64 ist ein Widertagerorgan 66 zugeordnet, das an der Gewindespindel 60 befestigt ist. Zwischen dem Widerlagerorgan 66 und dem zweiten Schenkel 38 des Winkelelementes 32 ist ein Federelement 68 eingespannt, das von einer Hülse aus elastischem Material gebildet ist.

An der Gewindespindel 60 ist außerdem eine Verdrehsicherungseinrichtung 70 festgeschweißt, die am Felgenbett 16 einer Felge 12 (siehe die Figuren 1 und 2) innenseitig anliegt. Die Verdrehsicherungseinrichtung 70 weist ein Paar Fingerelemente 72 auf, deren vom Widerlagerorgan 66 entfernte, distale freie Enden 74 den beiden ersten Hakenelementen 44 derartig zugeordnet sind, dass der Spaltabstand 76 (siehe Fig.5) zwischen den distalen freien Enden 74 der beiden Fingerelemente 72 und den freien Enden 78 der zugehörigen beiden ersten Hakenelemente 44 im Montagezustand des entsprechenden Kettenelementes 24 (siehe die Figuren 1 und 2) kleiner ist als die Querschnittsabmessungen der Kettenglieder des zugehörigen Kettenelementes 24. Hierdurch wird bei einem gebrochenen Kettenelement 24 der eine Verletzungsgefahr darstellende Vorderabschnitt des gebrochenen Kettenelementes 24 vom sich drehenden Fahrzeugrad nicht weggeschleudert, sondern zwischen dem entsprechenden ersten Hakenelement 44 und dem zugehörigen Fingerelement 72 festgehalten. Es ergibt sich somit ein Verlierschutz für das jeweilige Kettenelement 24.

Um einen solchen kleinen Spaltabstand 76 auf einfache Weise zuverlässig zu gewährleisten, schließen die beiden Fingerelemente 72 miteinander einen Spitzen Winkel α ein. Der spitze Winkel α ist derartig dimensioniert, dass die beiden Fingerelemente 72 in der gedachten Verlängerung sich quasi an den ersten Hakenelementen 44 schleifend vorbei bewegen.

Auf den beiden Fingerelementen 72 ist jeweils eine schützende Hülle 81 vorgesehen, um die Felge gegen ein Verkratzen o.dgl. zu schützen.

Wie die Fig.7 zeigt, ist an den beiden Endabschnitten 82 des einseitig offenen Ringelements 26 jeweils ein Hülsenelement 84 befestigt. Durch die beiden Hülsenelemente 84 erstreckt sich ein Gewindebolzen 86 mit mechanischem Spiel hindurch. Zu diesem Zwecke sind die Hülsenelemente 84 jeweils mit einem Durchgangsloch 88 ausgebildet, dessen lichte Querschnittsabmessungen größer sind als die Querschnittsabmessungen des Gewindebolzens 86. Der Gewindebolzen 86 weist ein dem einen Hülsenelement 84 zugeordnetes und am Gewindebolzen 86 fixiertes Widerlagerelement 90 und eine dem anderen Hülsenelement 84 zugeordnete Schraubmutter 92 sowie eine Kontermutter 94 auf. Durch Drehen der Schraubmutter 92 gegen das zugehörige Hülsenelement 84 kann das einseitig offene Ringelement 26 aufgeweitet, d.h. in seinem Durchmesser vergrößert, und in der Felgenrinne 30 eines Fahrzeugrades 10 zuverlässig fixiert werden. Die Kontermutter 94 dient dann dazu, diese Fixierung zu sichern.

Gleiche Einzelheiten sind in den Figuren 1 bis 7 jeweils mit denselben Bezugsziffern bezeichnet, so dass es sich erübrigt, in Verbindung mit den Figuren alle Einzelheiten jeweils detailliert zu beschreiben.

### Bezugsziffernliste:

- 10: Fahrzeugrad
- 12: Felge (von 10)
- 14: Löcher (in 12)
- 16: Felgenbett (von 12 für 18)
- 18: Reifen (von 10)
- 20: Vorrichtung (für 10)
- 22: Halteeinrichtung (von 20 für 24)
- 24: Kettenelement (für 10)
- 26: einseitig offenes Ringelement (von 22)
- 27: Öffnung (von 26)
- 28: Spannorgan (für 26 bei 27)
- 30: Felgenrinne (von 16)
- 32: Winkelelement (an 26)
- 36: erster Schenkel (von 32 an 26)
- 38: zweiter Schenkel (von 32 für 54)
- 40: Ebene (von 26)
- 42: Seitenränder (von 36 für 44)
- 44: erste Hakenelemente (an 42)
- 46: Pfeil (zwischen 40 und 44)
- 48: Pfeil (zwischen 40 und 44)
- 50: Durchgangsloch (in 38 für 54)
- 52: Ringansatz (in 50)
- 53: Ringelement (für 54)
- 54: Schraubmutter (für 60)
- 60: Gewindespindel (von 22)
- 62: Gewindeabschnitt (von 60)
- 64: zweites Hakenelement (an 60)
- 66: Widerlagerorgan (an 60 für 68)
- 68: Federelement (an 60 zwischen 66 und 38)
- 70: Verdrehsicherungseinrichtung (an 60)
- 72: Fingerelemente (von 70)
- 74: freie Enden (von 72)
- 76: Spaltabstand (zwischen 74 und 78)
- 78: freie Enden (von 44)
- 80: Stopfen (an 60 für 54)
- 81: schützende Hülle (an 72)
- 82: Endabschnitte (von 26)
- 84: Hülsenelemente (an 82)
- 86: Gewindebolzen (zwischen 84 und 84)
- 88: Durchgangsloch (in 84)
- 90: Widerlagerelement (an 86 für 84)
- 92: Schraubmutter (an 86 für 84)
- 94: Kontermutter (an 86 für 92)

## Patentansprüche

1. Vorrichtung (20) zum Verhindern eines Durchrutschens bzw. Durchdrehens eines in seiner Felge (12) Löcher (14) aufweisenden Fahrzeugrades (10), insbesondere eines Lastkraftwagen- oder Omnibus-Rades (10),
- mit den Reifen (18) des Rades (10) umgreifenden Kettenelementen (24),
- mit einer Halteeinrichtung (22) zum Halten der Kettenelemente (24), wobei die Halteeinrichtung (22) ein einseitig offenes Ringelement (26) mit einem die Öffnung (27) des Ringelementes (26) überspannenden Spannorgan (28) aufweist,
- mit am Ringelement (26) befestigten Paaren von ersten Hakenelementen (48), und
- mit einem dem jeweiligen ersten Hakenelement-Paar zugeordneten, in Achsrichtung der Felge (12) mittels einer Gewindespindel (60) gegen die Kraft eines Federelementes (68) verstellbaren zweiten Hakenelement (64),
- wobei die Gewindespindel (60) in der Nachbarschaft des zweiten Hakenelementes (64) ein Widerlagerorgan (66) für das Federelement (68) und eine Verdrehsicherungseinrichtung (70) aufweist,
**dadurch gekennzeichnet,**
**dass** die Verdrehsicherungseinrichtung (70) ein Paar Fingerelemente (72) aufweist, deren vom Widerlagerorgan (66) entfernte, freien Enden (74) den beiden ersten Hakenelementen (44) derartig zugeordnet sind, dass der Spaltabstand (76) zwischen den freien Enden (74) der beiden Fingerelemente (72) und den freien Enden (78) der zugehörigen beiden ersten Hakenelemente (44) im Spannzustand des entsprechenden Kettenelementes (24) kleiner ist als die Querschnittsabmessung der Kettenglieder des zugehörigen Kettenelementes (24).

2. Vorrichtung (20) nach Anspruch 1,
**dadurch gekennzeichnet,**
**dass** die beiden ersten Hakenelemente (44) des jeweiligen Hakenelement-Paares von der vom einseitig offenen Ringelement (26) aufgespannten Ebene (40) in axialer Richtung ungleich weit wegstehen, und dass die zugehörigen beiden Fingerelemente (72) daran angepasste, ungleiche Längen besitzen.

3. Vorrichtung (20) nach Anspruch 1 oder 2,
**dadurch gekennzeichnet,**
**dass** die beiden Fingerelemente (72) miteinander einen spitzen Winkel (α) einschließen.

4. Vorrichtung (20) nach einem der Ansprüche 1 bis 3,
**dadurch gekennzeichnet,**
**dass** an den beiden Endabschnitten (82) des einseitig offenen Ringelementes (26) jeweils ein Hülsenelement (84) befestigt ist, und dass sich durch die beiden Hülsenelemente (84) ein Gewindebolzen (86) mit mechanischem Spiel hindurch erstreckt.

5. Vorrichtung (20) nach Anspruch 4,
**dadurch gekennzeichnet,**
**dass** der Gewindebolzen (86) ein dem einen Hülsenelement (84) zugeordnetes Widerlagerelement (90) und eine dem anderen Hülsenelement (84) zugeordnete Schraubmutter (92) mit einer Kontermutter (94) aufweist.

## Claims

1. Device (20) for preventing slipping or spinning of a vehicle wheel (10) having holes (14) in the rim (12) thereof, especially a wheel (10) on a lorry or bus,
- with chain elements (24) fitting the tyre (18) of the wheel (10),
- with a holding device (22) for holding the chain elements (24), wherein the holding device (22) has a ring element (26) which is open on one side and has a clamping member (28) spanning the opening (27) of the ring element (26),
- with pairs of first hook elements (48) fastened to the ring element (26), and
- with a second hook element (64) which is assigned to the respective pair of first hook elements and is adjustable in the axial direction of the rim (12) by means of a threaded spindle (60) counter to the force of a spring element (68),
- wherein in the vicinity of the second hook element (64), the threaded spindle (60) has an abutment member (66) for the spring element (68) and an anti-twist device (70),
**characterized in that**
the anti-twist device (70) has a pair of finger elements (72), the free ends (74) of which, which ends are remote from the abutment member (66), are assigned to the two first hook elements (44) in such a manner that, in the clamping state of the corresponding chain element (24), the gap distance (76) between the free ends (74) of the two finger elements (72) and the free ends (78) of the associated two first hook elements (44) is smaller than the cross-sectional size of the chain links of the associated chain element (24).

2. Device (20) according to Claim 1, **characterized in that** the two first hook elements (44) of the respective pair of hook elements protrude away to unequal distances in the axial direction from the plane (40) spanned by the ring element (26) which is open on one side, and **in that** the associated two finger elements (72) have unequal lengths matched thereto.

3. Device (20) according to Claim 1 or 2, **characterized in that** the two finger elements (72) enclose an acute angle (α) with each other.

4. Device (20) according to one of Claims 1 to 3, **characterized in that** a sleeve element (84) is fastened to each of the two end sections (82) of the ring element (26) which is open on one side, and **in that** a threaded bolt (86) extends with mechanical play through the two sleeve elements (84).

5. Device (20) according to Claim 4, **characterized in that** the threaded bolt (86) has an abutment element (90) assigned to one sleeve element (84) and a screw nut (92) having a lock nut (94) assigned to the other sleeve element (84).

## Revendications

1. Dispositif (20) pour empêcher un glissement ou un patinage d'une roue de véhicule (10) présentant des orifices (14) dans sa jante (12), notamment d'une roue (10) d'un camion ou d'un omnibus, comprenant :
- des éléments de chaîne (24) venant en prise autour du pneu (18) de la roue (10),
- un dispositif de retenue (22) pour retenir les éléments de chaîne (24), le dispositif de retenue (22) présentant un élément annulaire ouvert d'un côté (26) avec un organe de serrage (28) s'étendant pardessus l'ouverture (27) de l'élément annulaire (26),
- des paires de premiers éléments de crochet (48) fixées à l'élément annulaire (26), et
- un deuxième élément de crochet (64) associé à la première paire d'éléments de crochet respective, déplaçable dans la direction de l'axe de la jante (12) au moyen d'une broche filetée (60) à l'encontre de la force d'un élément de ressort (68),
- la broche filetée (60) présentant, à proximité du deuxième élément de crochet (64), un organe de butée (66) pour l'élément de ressort (68) et un dispositif de fixation en rotation (70),
**caractérisé en ce que**
le dispositif de fixation en rotation (70) présente une paire d'éléments de doigts (72) dont les extrémités libres (74), éloignées de l'organe de butée (66), sont associées aux deux premiers éléments de crochet (44) de telle sorte que la distance de
l'interstice (76) entre les extrémités libres (74) des deux éléments de doigts (72) et les extrémités libres (78) des deux premiers éléments de crochet associés (44) dans l'état serré de l'élément de chaîne correspondant (24) soit plus petite que la dimension en section transversale des maillons de chaîne de l'élément de chaîne associé (24).

2. Dispositif (20) selon la revendication 1,
**caractérisé en ce que**
les deux premiers éléments de crochet (44) de la paire d'éléments de crochet respective font saillie depuis le plan (40) tendu par l'élément annulaire ouvert d'un côté (26) dans la direction axiale sur une distance différente, et **en ce que** les deux éléments de doigts associés (72) possèdent des longueurs différentes adaptées en conséquence.

3. Dispositif (20) selon la revendication 1 ou 2,
**caractérisé en ce que**
les deux éléments de doigts (72) forment ensemble un angle aigu (α).

4. Dispositif (20) selon l'une quelconque des revendications 1 à 3,
**caractérisé en ce**
**qu'**un élément de douille (84) est à chaque fois fixé aux deux portions d'extrémité (82) de l'élément annulaire ouvert d'un côté (26), et en ce qu'un boulon fileté (86) s'étend avec un jeu mécanique à travers les deux éléments de douille (84).

5. Dispositif (20) selon la revendication 4,
**caractérisé en ce que**
le boulon fileté (86) présente un élément de butée (90) associé à un élément de douille (84) et un écrou fileté (92) avec un contre-écrou (94) associé à l'autre élément de douille (84).
